# EUROPÄISCHE PATENTSCHRIFT

(11) **EP 2 916 045 B1**
(45) Veröffentlichungstag und Bekanntmachung des Hinweises auf die Patenterteilung: **15.01.2020**
(21) Anmeldenummer: 15156946.4
(22) Anmeldetag: 27.02.2015
(51) Int. Cl.: F16H 63/34, F16H 61/12, F16H 63/18

(54) **PARKSPERRENANORDNUNG UND KRAFTFAHRZEUGGETRIEBE**
PARKING LOCK ASSEMBLY AND VEHICLE TRANSMISSION
SYSTÈME DE FREIN DE STATIONNEMENT ET BOÎTE DE VITESSES DE VÉHICULE AUTOMOBILE

(30) Priorität: 04.03.2014 DE 102014102831
(43) Veröffentlichungstag der Anmeldung: 09.09.2015
(73) Patentinhaber: Magna PT B.V. & Co. KG, 74199 Untergruppenbach (DE)
(72) Erfinder: Kristofcsak, Andras, 51375 Leverkusen (DE)
(74) Vertreter: Rausch, Gabriele

(56) Entgegenhaltungen:
- EP-A1- 1 865 237
- EP-B1- 1 334 297
- DE-A1- 10 157 460
- FR-A1- 2 967 226

## Beschreibung

Die vorliegende Erfindung betrifft eine Parksperrenanordnung für ein Kraftfahrzeuggetriebe, mit einem Gehäuse, mit einem Parksperrenrad, das mit einer Welle des Kraftfahrzeuggetriebes verbindbar ist, mit einer Parksperrenklinke, die um eine gehäusefeste Klinkenachse zwischen einer Parksperrenposition und einer Freigabeposition verschwenkbar ist, wobei die Parksperrenklinke in der Parksperrenposition mit dem Parksperrenrad in Eingriff steht und dessen Drehung verhindert, mit einem Betätigungsmechanismus für die Parksperrenklinke und mit einer Aktuatoranordnung für den Betätigungsmechanismus, wobei die Aktuatoranordnung ein Stellglied, insbesondere eine Walze, aufweist, das zwischen einer Grundposition und einer Parkposition versetzbar, insbesondere verdrehbar ist und mit dem Betätigungsmechanismus gekoppelt ist. Sofern das Steuerglied als Walze ausgebildet ist, weist die Walze einen der Parkposition zugeordneten Nockenabschnitt auf, wobei die Aktuatoranordnung dann ferner eine Hebelanordnung mit einem Nockenhebel aufweist, der um eine gehäusefeste Hebelachse verschwenkbar ist und der einen Nockenfolgerabschnitt aufweist, wobei dann der Nockenhebel mit dem Betätigungsmechanismus gekoppelt ist.

Ferner betrifft die vorliegende Erfindung ein Kraftfahrzeuggetriebe mit einer solchen Parksperrenanordnung.

Eine Parksperrenanordnung ist aus dem Dokument EP 1 865 237 A1 bekannt. Bei dieser Parksperrenanordnung sind der Betätigungsmechanismus und die Aktuatoranordnung durch einen einzelnen zweiseitigen Hebel gebildet, dessen eine Seite über eine Feder an einem Nockenabschnitt einer Schaltwalze angreift und dessen andere Seite die Sperrklinke bildet. Eine weitere Parksperrenanordnung für ein Kraftfahrzeug ist aus dem Dokument DE 10 2009 018 122 A1 bekannt. Diese Parksperrenanordnung weist einen Betätigungsmechanismus in Form eines Ziehkeiles auf, der mittels eines Magnetaktuators betätigbar ist. Eine weitere Parksperrendanordnung mit allen Merkmalen des Oberbegriffes des Anspruchs 1 ist aus der DE 101 57 460 A1 bekannt.

Es ist die Aufgabe der vorliegenden Erfindung, eine verbesserte Parksperrenanordnung sowie ein verbessertes Kraftfahrzeuggetriebe anzugeben, wobei ein sicheres Einrichten der Parksperrenposition gewährleistet werden kann.

Die obige Aufgabe wird gemäß der Erfindung gelöst durch eine Parksperrenanordnung für ein Kraftfahrzeuggetriebe, mit den Merkmalen des Anspruchs 1.

Gemäß einem ersten bevorzugten Aspekt der vorliegenden Erfindung kann die Aktuatoranordnung eine Walze aufweisen, die zwischen einer Grundposition und einer Parkposition verdrehbar ist, wobei die Walze einen der Parkposition zugeordneten Nockenabschnitt aufweist, wobei die Aktuatoranordnung ferner eine Hebelanordnung mit einem Nockenhebel aufweist,der um eine gehäusefeste Hebelachse verschwenkbar ist und der einen Nockenfolgerabschnitt aufweist, wobei der Nockenhebel mit dem Betätigungsmechanismus gekoppelt ist, wobei die Hebelanordnung einen Betätigungshebel aufweist, der über eine lösbare Koppeleinrichtung mit dem Nockenhebel gekoppelt und mit dem Betätigungsmechanismus zwangsgekoppelt ist, wobei der Betätigungshebel ferner in eine Verschwenkrichtung mechanisch vorgespannt ist, um über den Betätigungsmechanismus die Parksperrenklinke in die Parksperrenposition zu drücken.

Ferner wird die obige Aufgabe gelöst durch ein Kraftfahrzeuggetriebe mit einer erfindungsgemäßen Parksperrenanordnung, wobei im Falle des ersten Aspektes der Erfindung die Walze vorzugsweise eine Schaltwalze zum Betätigen wenigstens einer Schaltkupplungsanordnung des Kraftfahrzeuggetriebes ist.

Zum ordnungsgemäßen Einrichten der Parksperrenposition der Parksperrenklinke wird im Falle des ersten Aspektes der Erfindung die Walze so angetrieben, dass deren Nockenabschnitt mit dem Nockenfolgerabschnitt des Nockenhebels in Eingriff gelangt, wodurch der Nockenhebel in eine Verschwenkrichtung verschwenkt wird, die so gerichtet ist, dass über den Betätigungsmechanismus die Parksperrenklinke in die Parksperrenposition gedrückt werden kann. Dies erfolgt im Normalfall dadurch, dass der Nockenhebel über die Koppeleinrichtung mit dem Betätigungshebel gekoppelt ist und folglich ein Verschwenken des Nockenhebels ein Beaufschlagen des Betätigungsmechanismus mit einer Kraft mit sich bringt, mittels der die Parksperrenklinke in die Parksperrenposition gedrückt wird.

Sofern an der Schaltwalze ein Fehler vorliegt und/oder die Schaltwalze aus anderen Gründen nicht so verdreht werden kann, dass der Nockenabschnitt mit dem Nockenfolgerabschnitt des Nockenhebels in Eingriff gelangt, wird dieser Zustand von einer übergeordneten Steuereinrichtung erfasst. Die Steuereinrichtung gibt hierauf ein elektrisches Lösesignal an die Koppeleinrichtung ab. Die Koppeleinrichtung wird hierdurch gelöst. Hierdurch ist der Betätigungshebel nicht mehr mit dem Nockenhebel gekoppelt und wird aufgrund der mechanischen Vorspannung verschwenkt, um auf diese Weise über den Betätigungsmechanismus die Parksperrenklinke in die Parksperrenposition zu drücken.

Mit anderen Worten kann das Betätigen der Parksperrenanordnung entweder mittels der Schaltwalze erfolgen oder durch Abgabe es elektrischen Lösesignals.

Bei der vorliegenden Erfindung wird das Stellglied zum Einrichten der Parksperrenposition so angetrieben, dass es in eine Parkposition versetzbar ist. Durch die Kopplung mit dem Betätigungsmechanismus wird die Parksperrenklinke in die Parkposition gedrückt. Das Stellglied kann eine Walze sein, kann jedoch auch ein linear bewegliches Stellglied oder ein verschwenkbares Stellglied oder dergleichen sein.

Sofern das Stellglied nicht versetzt werden kann, kann dieser Zustand vorzugsweise von einer übergeordneten Steuereinrichtung erfasst werden, die dann das elektrische Lösesignal an die Koppeleinrichtung abgibt. Die Koppeleinrichtung wird hierdurch gelöst. Hierdurch ist das Betätigungsglied nicht mehr mit dem Stellglied gekoppelt. Aufgrund der Zwangskopplung und der Vorspannung des Betätigungsgliedes wird dieses dann so bewegt, dass die Parksperrenklinke in die Parksperrenposition gedrückt wird.

Bei dem ersten Aspekt der Erfindung wird ein Nockenhebel mittels einer Walze verschwenkt. Bei der Erfindung kann das Stellglied auch durch andere Mittel verschwenkt werden, beispielsweise durch einen Hydraulikzylinder. Auch kann das Stellglied durch ein translatorisch versetzbares Glied ausgebildet sein, anstelle eines verschwenkbaren Hebels. Sämtliche folgenden Bezugnahmen auf einen Nockenhebel und dessen Betätigung durch eine Walze können sich in gleicher Weise auf ein translatorisch oder rotatorisch versetzbares Stellglied beziehen, das mittels beliebiger Mittel versetzt bzw. verstellt wird. In gleicher Weise muss die Aktuatoranordnung nicht notwendigerweise einen Betätigungshebel aufweisen. Vielmehr ist ein Betätigungsglied vorgesehen, das nach der Art eines Hebels verschwenkbar ist oder aber auch translatorisch oder auf sonstige Art und Weise versetzbar ist. Sämtliche folgenden Bezugnahmen auf einen Betätigungshebel sollen sich auf ein derart verallgemeinertes Betätigungsglied beziehen, das über eine lösbare Koppeleinrichtung mit dem Stellglied gekoppelt ist.

Mit anderen Worten weist die Aktuatoranordnung eine beliebige Anordnung aus einem Stellglied und einem Betätigungsglied auf, die über eine lösbare Koppeleinrichtung miteinander gekoppelt sind, wobei das Stellglied und/oder das Betätigungsglied rotatorisch versetzbar sind, translatorisch versetzbar sind oder auf sonstige Art und Weise versetzbar sind. Auch kann beispielsweise das Stellglied rotatorisch versetzt werden und das Betätigungsglied translatorisch, oder umgekehrt.

Das Lösesignal kann in manchen Ausführungsformen auch ein hydraulisches Lösesignal sein, in welchem Fall die Koppeleinrichtung so ausgebildet ist, dass sie mittels eines hydraulischen Lösesignals lösbar ist.

Die Koppeleinrichtung kann beispielsweise über einen Magnetaktuator gelöst werden, der von dem elektrischen Lösesignal ansteuerbar ist, um die Koppeleinrichtung zu lösen.

Der Betätigungsmechanismus für die Parksperrenklinke kann auf verschiedene Art und Weise realisiert sein. Hierbei kann es sich um eine Ziehkeil-Anordnung handeln, bei der ein Ziehkeil zwischen einen Gehäuseabschnitt und die Parksperrenklinke gedrückt wird, um diese in die Parksperrenposition zu verschwenken. Der Ziehkeil kann dabei an einem Koppelstab begrenzt verschieblich gelagert sein, wobei eine Einrastfeder vorgesehen ist. Für den Fall, dass der Betätigungsmechanismus die Parksperrenklinke betätigt, während ein Parksperrenzahn der Parksperrenklinke auf einem Zahn einer Verzahnung des Parksperrenrades steht (Zahn auf Zahn), wird die Einrastfeder gespannt, wobei ein Relativversatz zwischen dem Ziehkeil und dem den Ziehkeil tragenden Stab erfolgt. Sobald das Fahrzeug ausgehend aus dieser Position weiterrollt, wird das Parksperrenrad verdreht, sodass die Parksperrenklinke mit ihrem Zahn in die nächste Zahnlücke eingreifen kann, was durch die gespannte Einrastfeder erfolgt.

Ein derartiger Betätigungsmechanismus ist im Stand der Technik allgemein bekannt. Ferner ist der Parksperrenklinke in der Regel eine Halteeinrichtung vorgesehen, die die Parksperrenklinke in der Freigabeposition halten kann. Die Halteeinrichtung kann beispielsweise eine Haltefeder sein, kann jedoch auch durch eine geeignete Führung gebildet sein.

Generell kann der Betätigungsmechanismus folglich durch ein translatorisch versetzbares Glied wie einen Stab gebildet sein, an dem ein Ziehkeil angeordnet ist. Es ist jedoch auch möglich, dass der Betätigungsmechanismus einen Nockenmechanismus aufweist, der um eine Achse verdreht wird. Hierbei ist häufig ein Betätigungsnocken zum Betätigen der Parksperrenklinke über eine Dreh-Einrastfeder mit einer Betätigungswelle des Betätigungsmechanismus verbunden. Auf diese Weise kann die gleiche Funktion bei einer Situation "Zahn auf Zahn" erreicht werden, wie oben beschrieben.

Auch derartige Betätigungsmechanismen sind allgemein bekannt.

Die Klinkenachse ist vorzugsweise parallel zu der Welle des Kraftfahrzeuggetriebes ausgerichtet, kann jedoch auch quer hierzu ausgerichtet sein. Die Walze des ersten Aspektes der Erfindung ist vorzugsweise mittels eines Aktuatorantriebs verdrehbar, bei dem es sich beispielsweise um einen Elektromotor handeln kann. Der Aktuatorantrieb zum Antreiben der Walze kann jedoch auch ein hydraulischer Antrieb sein. Eine Drehachse der Walze ist vorzugsweise parallel zu einer Achse der Welle des Kraftfahrzeuggetriebes ausgerichtet. Hierdurch kann an einem Außenumfang der Walze beispielsweise eine Kontur vorgesehen sein, die dazu ausgelegt ist, eine Schaltgabel axial in Bezug auf die Welle zu versetzen, um auf diese Weise beispielsweise eine Schaltkupplungsanordnung zu betätigen.

Eine derartige Schaltkupplungsanordnung beinhaltet vorzugsweise wenigstens ein an einer Welle gelagertes Losrad, das mittels der Schaltkupplungsanordnung mit der Welle drehfest verbindbar ist, um auf diese Weise beispielsweise eine Gangstufe in dem Kraftfahrzeuggetriebe einzulegen.

Bei der Erfindung kann das Stellglied auf beliebige Art und Weise mittels eines Aktuatorantriebs versetzt werden, wobei der Aktuatorantrieb ein Elektromotor sein kann, ein hydraulischer Zylinder, ein Elektromagnet oder dergleichen.

Der Nockenhebel des ersten Aspektes der Erfindung ist vorzugsweise ebenfalls mechanisch vorgespannt, und zwar in eine Richtung, so dass der Nockenfolgerabschnitt in Richtung eines Umfangsabschnitts der Walze angedrückt wird, an dem auch der Nockenabschnitt ausgebildet ist. Der Nockenabschnitt und der Nockenfolgerabschnitt sind so aufeinander abgestimmt, dass bei einem Eingriff derselben der Nockenhebel in eine Richtung verschwenkt wird, um über den Betätigungshebel und den Betätigungsmechanismus die Parksperrenklinke in die Parksperrenposition zu drücken. Das Betätigungsglied ist mechanisch vorgespannt.

Das Lösesignal zum Lösen der Koppeleinrichtung kann vorzugsweise durch einen Vergleich einer Verschwenkposition des Betätigungshebels mit einer Verdrehposition der Schaltwalze erzeugt werden, und zwar in einer Steuereinrichtung, die vorzugsweise dem Kraftfahrzeuggetriebe zugeordnet Bei der Erfindung kann das Lösesignal vorzugsweise durch einen Vergleich einer Position des Betätungsgliedes mit einer Position bzw. Stellung des Stellgliedes und/oder eines Aktuatorantriebes für das Stellglied erzeugt werden, und zwar in einer Steuereinrichtung.

Der Nockenabschnitt des ersten Aspektes der Erfindung kann ein gegenüber einem Umfangsabschnitt der Walze vorstehender Abschnitt sein, kann jedoch auch eine gegenüber dem Umfang der Schaltwalze zurücktretende Vertiefung sein.

Wenn die Koppeleinrichtung gelöst worden ist, sodass der Betätigungshebel die Parksperrenklinke über den Betätigungsmechanismus in die Parksperrenposition gedrückt hat, erfolgt beim ersten Aspekt der Erfindung ein erneutes Koppeln von Betätigungshebel und Nockenhebel vorzugsweise folgendermaßen. Hierzu wird dann, wenn die Walze wieder verdrehbar ist, diese in die Parkposition verdreht. Hierdurch folgt der Nockenhebel dem Verschwenkweg des Betätigungshebels. Das elektrische Lösesignal kann in diesem Fall abgeschaltet werden. Vorzugsweise erfolgt ein erneutes Koppeln von Betätigungshebel und Nockenhebel dann beispielsweise aufgrund einer Rasteinrichtung oder einer sonstigen mechanisch vorgespannten Einrichtung. Generell ist es auch denkbar, die Koppeleinrichtung wieder aktiv in den Koppelzustand zu versetzen.

Anschließend kann die Schaltwalze wieder aus der Parkposition weiterverdreht werden. In diesem Fall bewegt der Betätigungshebel aufgrund der Einwirkung des Nockenhebels den Betätigungsmechanismus in eine Position, bei der die Parksperrenklinke in die Freigabeposition verschwenkbar ist oder zwangsweise verschwenkt wird.

Wenn die Koppeleinrichtung gelöst worden ist, so dass das Betätigungsglied die Parksperrenklinke über den Betätigungsmechanismus in die Parksperrenposition gedrückt hat, erfolgt ein erneutes Koppeln von Stellglied und Betätigungsglied vorzugsweise durch eine Rasteinrichtung oder eine sonstige mechanisch vorgespannte Einrichtung, und zwar vorzugsweise bei einem Zurückversetzen eines Aktuatorantriebs für das Stellglied aus der Grundposition in die Parkposition. Wie bei dem ersten Aspekt der Erfindung ist es auch denkbar, die Koppeleinrichtung wieder aktiv in den Koppelzustand zu versetzen. Anschließend kann der Aktuatorantrieb wieder aus der Parkposition in die Grundposition versetzt werden, wobei aufgrund der Kopplung zwischen Betätigungsglied und Stellglied dann das Betätigungsglied wieder in die Grundposition überführt wird, bei der die Parksperrenklinke in die Freigabeposition versetzbar ist.

Anstelle eines Sensors zum Erfassen der Position des Betätigungshebels ist es auch möglich, die Position des Betätigungsmechanismus zu erfassen. Es ist auch denkbar, die Position der Parksperrenklinke zu erfassen.

Um kein unbeabsichtigtes Lösen der Parksperrenanordnung über längere Zeiträume zu gewährleisten, ist es auch denkbar, die Koppeleinrichtung immer zu lösen, wenn sich die Schaltwalze oder ein anderer Aktuatorantrieb in der Parkposition befindet, um auf diese Weise eine Redundanz hinsichtlich der Einlegesicherheit zu erzielen.

Die Aufgabe wird somit vollkommen gelöst.

Von besonderem Vorzug ist es, wenn bei dem ersten Aspekt der Erfindung der Betätigungshebel um die Hebelachse verschwenkbar ist.

Hierbei sind der Betätigungshebel und der Nockenhebel um die gleiche Hebelachse verschwenkbar, was das Realisieren einer Koppeleinrichtung konstruktiv vereinfacht.

Gemäß einer besonders bevorzugten Ausführungsform weist die Koppeleinrichtung einen Koppelstift auf, der in einer Koppelposition Öffnungen in dem Nockenhebel und in dem Betätigungshebel oder Öffnungen in dem Stellglied und dem Betätigungsglied axial durchsetzt.

Auf diese Weise können die Hebel oder Glieder auf konstruktiv einfache Weise fest miteinander gekoppelt werden.

Dabei ist es bevorzugt, wenn der Koppelstift in die Koppelposition vorgespannt ist.

Dies ermöglicht nach einem Lösen der Koppeleinrichtung ein automatisches Wiedereinrichten der Koppelposition, wenn die zwei Hebel oder Glieder wieder in eine vorbestimmte relative Position zueinander verbracht werden.

Insgesamt ist es auch bevorzugt, wenn der Koppelstift an dem Betätigungsglied bzw. Betätigungshebel axial verschieblich gelagert ist.

Auf diese Weise ist der Koppelstift fest dem Betätigungshebel oder dem Betätigungsglied zugeordnet.

Es versteht sich, dass der Nockenhebel oder das Stellglied in einem Bereich, der einem Relativversatz des Koppelstifts in Bezug auf den Nockenhebel oder das Stellglied bei Lösen der Koppeleinrichtung entspricht, flächig ausgebildet ist, und zwar vorzugsweise flächig mit einer Ausrichtung senkrecht zu einer Bewegungsachse des Koppelstifts.

Demzufolge kann der Koppelstift, wenn er gegen seine Vorspannung zurückversetzt ist, um den Nockenhebel oder das Stellglied freizugeben, mit seiner Stirnseite über diese Fläche gleiten, wenn bei gelöster Koppeleinrichtung der Betätigungshebel oder das Betätigungsglied relativ zu dem Nockenhebel oder dem Stellglied verschwenkt oder sonstwie bewegt wird.

Gemäß einer weiteren bevorzugten Ausführungsform ist der Koppelstift mittels eines Magnetaktuators axial bewegbar, um die Koppeleinrichtung zu lösen.

Die Bewegung erfolgt insbesondere entgegen einer Vorspannung des Koppelstifts, mit der der Koppelstift in die Koppelposition vorgespannt ist.

Ein Magnetaktuator dieser Art lässt sich auf einfache Weise mittels eines elektrischen Lösesignals ansteuern, das beispielsweise von einer Steuereinrichtung erzeugt wird.

Vor besonderem Vorzug ist es hierbei, wenn der Magnetaktuator an dem Nockenhebel oder an dem Stellglied festgelegt ist, und zwar vorzugsweise derart, dass ein beweglicher Anker des Magnetaktuators koaxial mit dem Koppelstift ausgerichtet ist, sofern die Koppeleinrichtung in der Koppelposition ist.

Insgesamt ist es ebenfalls vorteilhaft, wenn dem Betätigungshebel oder dem Betätigungsglied ein Positionssensor zugeordnet ist, der die Position des Betätigungshebels oder des Betätigungsgliedes erfasst.

Hierdurch kann erfasst werden, ob beispielsweise bei einem Signal zum Bewegen der Walze oder des Aktuatorantriebs in die Parkposition tatsächlich eine Bewegung des Betätigungshebels oder des Betätigungsgliedes in jene Position erfolgt ist, bei der dieser bzw. dieses über den Betätigungsmechanismus die Parksperrenklinke in die Parksperrenposition drückt.

Der Positionssensor kann beispielsweise gehäusefest montiert sein und das Vorhandensein eines an dem Betätigungshebel oder an dem Betätigungsglied festgelegten Magneten erfassen.

Gemäß einer weiteren insgesamt bevorzugten Ausführungsform ist die Drehposition der Walze mittels eines Drehpositionssensors oder eine Position des Stellgliedes mittels eines Positionssensors erfassbar.

Ein solcher Positionssensor kann ebenfalls als Magnetsensor oder als Inkrementalsensor ausgebildet sein. Ein solcher Positionssensor kann jedoch auch aus Signalen des Elektromotors abgeleitet werden, wenn ein solcher Elektromotor die Walze oder das Stellglied antreibt.

Ferner ist es vorteilhaft, wenn bei dem ersten Aspekt der Erfindung der Nockenhebel und der Betätigungshebel axial mittels einer Federanordnung aneinander gedrückt sind.

Hierdurch kann gewährleistet werden, dass diese sich permanent in Kontakt befinden und dass für einen Koppelstift, der Öffnungen in den Hebeln durchsetzt, eine hinreichende Überlappung in axialer Richtung eingerichtet werden kann, wenn die Koppeleinrichtung sich in der Koppelposition befindet.

Bei Ausführung der Walze als Schaltwalze zum Betätigen wenigstens einer Schaltkupplungsanordnung kann es vorkommen, dass die Schaltwalze auf dem Weg in die Parkposition in eine Schaltposition zu bewegen ist, bei der eine Gangstufe eingelegt wird. In manchen Fällen kann es vorkommen, dass das Einlegen einer solchen Gangstufe blockiert ist oder auch das Auslegen einer solchen Gangstufe. In diesem Fall kann es vorkommen, dass die Schaltwalze trotz eines entsprechenden Ansteuersignals nicht weitergedreht werden kann. Dies wäre beispielsweise ein Ausgangspunkt für das Erzeugen des elektrischen Lösesignals. Weiterhin kann ein solches elektrisches Lösesignal auch dann erzeugt werden, wenn die Aktuierung der Walze auf eine sonstige Art und Weise einen Fehlerzustand hat.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges eines Kraftfahrzeugs mit einer schematischen Darstellung einer erfindungsgemäßen Parksperrenanordnung, wobei eine Parksperrenklinke in einer Freigabeposition ist;
- Fig. 2: die Parksperrenanordnung der Fig. 1 mit der Parksperrenklinke in einer Parksperrenposition;
- Fig. 3: eine axiale Draufsicht auf eine weitere Ausführungsform einer erfindungsgemäßen Parksperrenanordnung;
- Fig. 4: eine perspektivische Ansicht der Parksperrenanordnung der Fig. 3 von schräg oben;
- Fig. 5: eine perspektivische Ansicht der Parksperrenanordnung der Fig. 3 von schräg unten
- Fig. 6: eine Schnittansicht entlang der Linie VI-VI der Fig. 3.

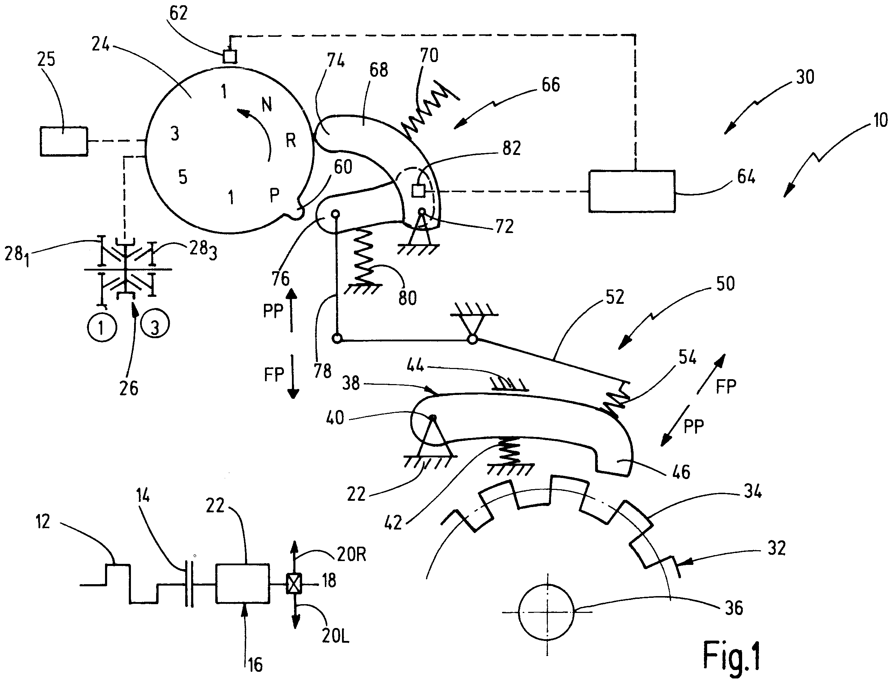

In Fig. 1 ist in schematischer Form ein Antriebsstrang für ein Kraftfahrzeug dargestellt und generell mit 10 bezeichnet. Der Antriebsstrang 10 weist einen Antriebsmotor 12 auf, der beispielsweise durch einen Verbrennungsmotor gebildet sein kann oder durch eine Hybrid-Antriebseinheit. Eine Antriebswelle des Antriebsmotors 12 ist mit einer Kupplungsanordnung 14 verbunden, die als einfache Kupplung oder als Doppelkupplung ausgebildet sein kann. Ausgangsseitig ist die Kupplungsanordnung 14 mit einem Getriebe 16 verbunden, das beispielsweise als Stufengetriebe ausgebildet sein kann, insbesondere in Vorgelegebauweise. Die Kupplungsanordnung 14 und das Getriebe 16 können jedoch auch durch eine Wandler-Automatik gebildet sein. Ein Ausgang des Getriebes 16 ist mit einem Differenzial 18 verbunden, mittels dessen Antriebsleistung auf angetriebene Räder 20L, 20R verteilt wird. Ein Gehäuse des Getriebes 16 ist bei 22 gezeigt.

Das Getriebe 16 weist eine Schaltwalze 24 auf, die mittels eines Schaltwalzenmotors 25 angetrieben ist, bei dem es sich beispielsweise um einen Elektromotor handeln kann. Die Schaltwalze 24 dient in an sich bekannter Weise zur Betätigung wenigstens einer Schaltkupplungsanordnung 26. Die in Fig. 1 gezeigte Schaltkupplungsanordnung 26 dient zur alternativen Verbindung einer nicht näher bezeichneten Welle des Getriebes 16 mit Losrädern 28₁ bzw. 28₃, die beispielsweise zum Einlegen von Gangstufen 1 und 3 dienen können.

Das Getriebe 16 weist ferner eine Parksperrenanordnung 30 auf. Die Parksperrenanordnung 30 beinhaltet ein Parksperrenrad 32, das an seinem Außenumfang eine Parksperrenverzahnung 34 aufweist und an einer Getriebewelle 36 festgelegt ist. Die Getriebewelle 36 ist vorzugsweise eine Ausgangswelle des Getriebes 16 oder eine Welle des Differenzials 18.

Die Parksperrenanordnung 30 beinhaltet ferner eine Parksperrenklinke 38, die um eine Klinkenachse 40 in Bezug auf das Gehäuse 22 verschwenkbar gelagert ist. Die Klinkenachse 40 ist vorzugsweise parallel zu der Getriebewelle 36 ausgerichtet. Die Parksperrenklinke 38 ist mittels einer Halteeinrichtung 42 in einer Freigabeposition FP gehalten, in der die Parksperrenklinke 38 das Parksperrenrad 32 freigibt, sodass dieses frei drehen kann. Die Halteeinrichtung 42 kann beispielsweise durch eine Feder gebildet sein, die die Parksperrenklinke 38 von dem Parksperrenrad 32 wegdrückt, beispielsweise gegen einen Anschlag 44.

Die Parksperrenklinke 38 weist einen Klinkenzahn 46 auf, der beim Einrichten einer Parksperrenposition PP in eine Zahnlücke der Parksperrenverzahnung 34 greifen kann.

Die Parksperrenklinke 38 ist mittels eines Betätigungsmechanismus 50 betätigbar. Ein derartiger Betätigungsmechanismus 50 kann in Getrieben des Standes der Technik von Hand über einen Schalthebel im Innenraum des Kraftfahrzeugs betätigt werden.

Ein derartiger Betätigungsmechanismus 50 kann auf verschiedene Art und Weise ausgebildet sein, beispielsweise durch einen translatorischen Betätigungsmechanismus, durch einen rotatorischen Betätigungsmechanismus oder, wie in Fig. 1 dargestellt, über einen zweiseitigen Hebel 52. Der eine Hebelarm des zweiseitigen Hebels 52 ist mit der Parksperrenklinke 38 gekoppelt. Hierbei wird in der Regel ein Sperrkörper verwendet, der die Parksperrenklinke 38 formschlüssig in der Parksperrenposition PP hält, ggf. über eine Einrastfeder 54. Aus Gründen einer übersichtlichen Darstellung ist in Fig. 1 nur eine Einrastfeder 54 dargestellt. Generell kann der Hebelarm auch durch die Parksperrenklinke gebildet sein.

Vorliegend wird der Betätigungsmechanismus 50 mittels einer Aktuatoranordnung 58 betätigt. Diese greift an dem anderen Hebelarm des zweiseitigen Hebels 52 an. Die Aktuatoranordnung 58 beinhaltet einen Nockenabschnitt 60 an der Schaltwalze 24.

Der Schaltwalze 24 kann ein Drehpositionssensor 62 zugeordnet sein, der die Drehposition der Schaltwalze 24 direkt oder mittelbar erfasst und einer Steuervorrichtung 64 übermittelt.

Die Aktuatoranordnung 58 beinhaltet ferner eine Hebelanordnung 66, die einen Nockenhebel 68 aufweist. Der Nockenhebel 68 ist um eine gehäusefeste Hebelachse 72 verschwenkbar gelagert und ist mittels einer Nockenhebelfeder 70 gegen einen Umfangsabschnitt der Schaltwalze 24 angedrückt. Der Nockenhebel 68 weist einen Nockenfolgerabschnitt 74 auf, der dann, wenn er mit dem Nockenabschnitt 60 in Eingriff kommt, den Nockenhebel 68 auslenkt bzw. verschwenkt, und zwar gegen die Kraft der Nockenhebelfeder 70.

Die Hebelanordnung 66 beinhaltet ferner einen Betätigungshebel 76, der ebenfalls verschwenkbar um die Hebelachse 72 gelagert ist. Der Betätigungshebel 76 ist über eine Koppelmechanik 78 mit dem Betätigungsmechanismus 50 gekoppelt, wobei es sich hierbei vorzugsweise um eine Zwangskopplung handelt. Der Betätigungshebel 76 ist mittels einer Betätigungshebelfeder 80, die sich vorzugsweise ebenfalls an einem Gehäuseabschnitt abstützt, in eine Richtung vorgespannt, bei der der Betätigungshebel 76 eine solche Kraft auf den Betätigungsmechanismus 50 ausübt, dass dieser die Parksperrenklinke 38 von der Freigabeposition FP in die Parksperrenposition PP drückt, wie es in Fig. 1 schematisch durch Pfeile angedeutet ist.

Der Betätigungshebel 76 ist mittels einer Koppeleinrichtung 82 mit dem Nockenhebel 68 gekoppelt, insbesondere verschwenkfest gekoppelt. Ein Verschwenken des Nockenhebels 68 aufgrund des Eingriffs des Nockenfolgerabschnitts 74 an dem Nockenabschnitt 60 führt folglich zwangsweise zu einem Mit-Verschwenken des Betätigungshebels 76, sodass dieser über den Betätigungsmechanismus 50 die Parksperrenklinke in die Parksperrenposition PP drückt.

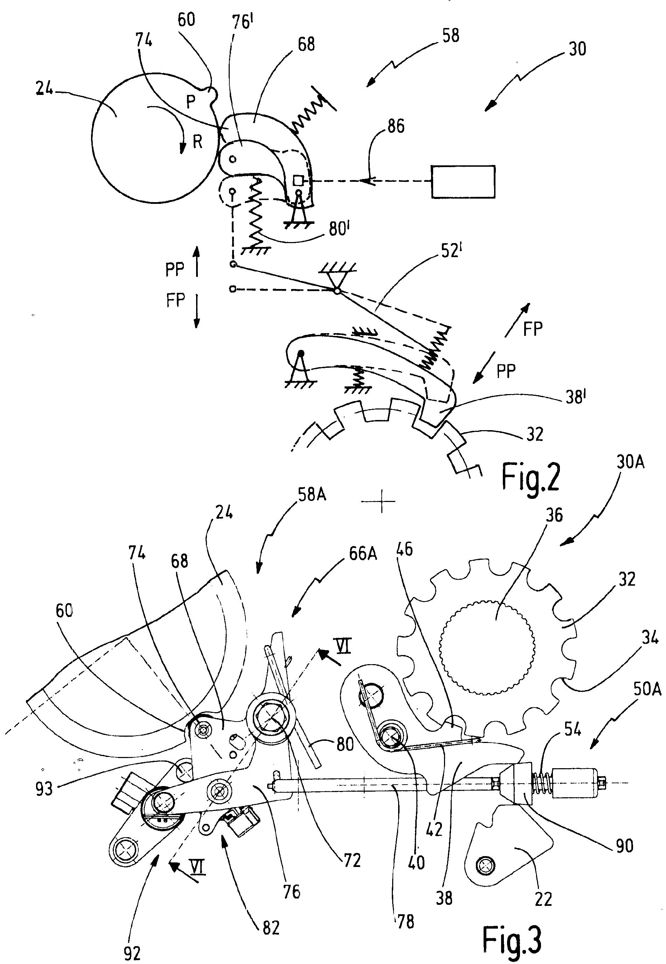

Die Koppeleinrichtung 82 ist so ausgebildet, dass sie mittels eines von der Steuervorrichtung 64 erzeugten Lösesignals 86 lösbar ist. Dies ist in Fig. 2 dargestellt. Durch das Lösen der Koppeleinrichtung kann der Betätigungshebel 76 frei relativ zu dem Nockenhebel 68 verschwenken. Aufgrund der mechanischen Vorspannung durch die Betätigungshebelfeder 80 wird der Betätigungshebel 76' in Richtung der Parksperrenposition PP verschwenkt. Hierdurch kann die Parksperrenklinke 38 in die Parksperrenposition PP gedrückt werden, wie es in Fig. 2 bei 38' gezeigt ist, ohne dass der Nockenhebel 68 mit seinem Nockenfolgerabschnitt 74 an dem Nockenabschnitt 60 der Schaltwalze 24 angreift.

Das Lösesignal 86 kann beispielsweise erzeugt werden, wenn der Drehpositionssensor 62 erfasst, dass trotz eines Einrichtungswunsches zum Betätigen der Parksperre die Parkposition P der Schaltwalze nicht eingerichtet ist, in der der Nockenfolgerabschnitt 74 an dem Nockenabschnitt 60 angreift. In Fig. 2 ist dargestellt, dass der Nockenfolgerabschnitt 74 vielmehr in einer Umfangsposition steht, die beispielsweise einer Gangposition entsprechen kann, hier der Gangposition R des Rückwärtsgangs. Aufgrund eines Ganghängers (kein Einlegen der Rückwärtsgangstufe möglich oder kein Auslegen der Rückwärtsgangstufe möglich) kann die Schaltwalze 24 nicht weitergedreht werden. In diesem Fall kann über das Lösesignal 86 die Koppeleinrichtung 82 gelöst werden, sodass die Parksperrenposition der Parksperrenklinke 38 dennoch sicher eingelegt werden kann.

Die obige Beschreibung einer Parksperrenanordnung basiert im Wesentlichen auf dem ersten Aspekt der vorliegenden Erfindung. Bei Ausführung einer Parksperrnanordnung gemäß der vorliegenden Erfindung kann ein Betätigungsglied beispielsweise durch einen verschwenkbaren Hebel 76 gebildet sein, oder auch durch ein translatorisch oder sonstiges bewegbares Element, wie einem Stab oder dergleichen, beispielsweise durch den Stab einer Koppelmechanik 78.

In gleicher Weise kann anstelle eines Nockenhebels ein Stellglied vorgesehen sein, das translatorisch oder rotatorisch versetzbar ist und das mit dem Betätigungsglied über eine Koppeleinrichtung gekoppelt ist. Anstelle einer Schaltwalze kann auch ein Aktuatorantrieb in Form eines Elektromotors, in Form eines hydraulichen Zylinders oder dergleichen vorgesehen sein.

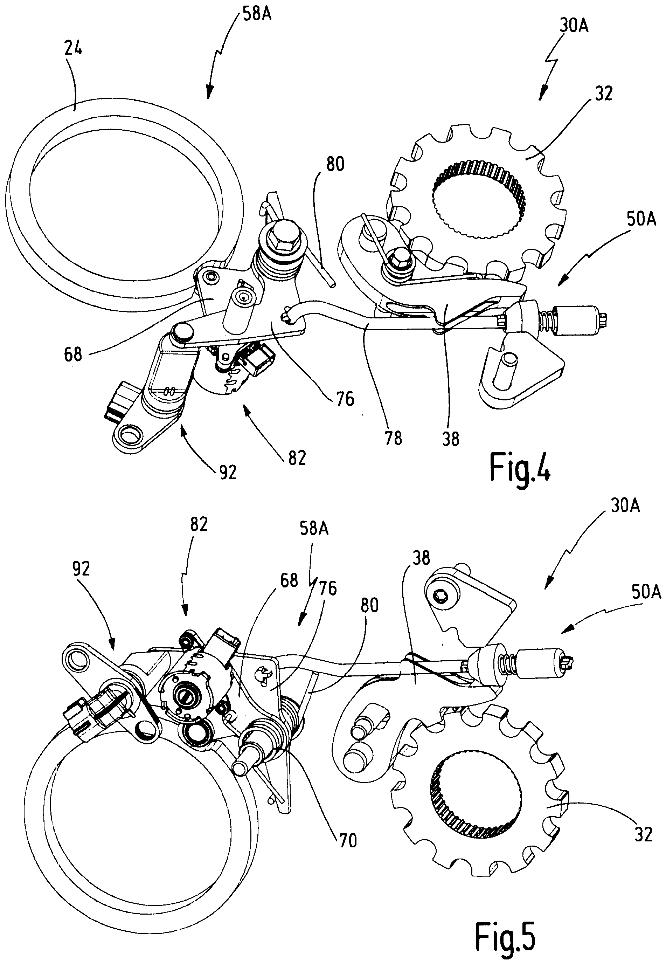

In den Figuren 3 bis 6 ist eine weitere Ausführungsform einer Parksperrenanordnung dargestellt, die in diesen Figuren mit 30 A bezeichnet ist und die hinsichtlich Aufbau und Funktionsweise generell der Parksperrenanordnung 30 der Figuren 1 und 2 entspricht. Gleiche Elemente sind daher durch gleiche Bezugszeichen gekennzeichnet. Im Folgenden werden im Wesentlichen die Unterschiede erläutert.

Der Betätigungsmechanismus 50A der Parksperrenanordnung 30A beinhaltet vorliegend eine Ziehkeilanordnung mit einem Ziehkeil 90, der an einer Koppelmechanik 78 in Form eines Stabes begrenzt verschieblich gelagert ist. Der Ziehkeil 90 ist über eine Einrastfeder 54 vorgespannt. Beim Bewegen des Stabes 78 in Keilrichtung drückt sich der Ziehkeil 90 zwischen einen Abschnitt des Gehäuses 22 und eine Anlagefläche der Parksperrenklinke 38, um diese in die Parksperrenposition zu drücken, wie es in den Figuren dargestellt ist.

Der Stab 78 ist gelenkig an den Betätigungshebel 76 festgelegt.

Es ist ferner zu erkennen, dass dem Betätigungshebel 76 ein Hebelpositionssensor 92 zugeordnet ist. Zu diesem Zweck ist an dem Betätigungshebel 76 ein Magnet 93 festgelegt, wobei der Hebelpositionssensor 92 gehäusefest montiert ist und beispielsweise nach dem Hall-Wirkprinzip die Position des Magnets 93 erfasst.

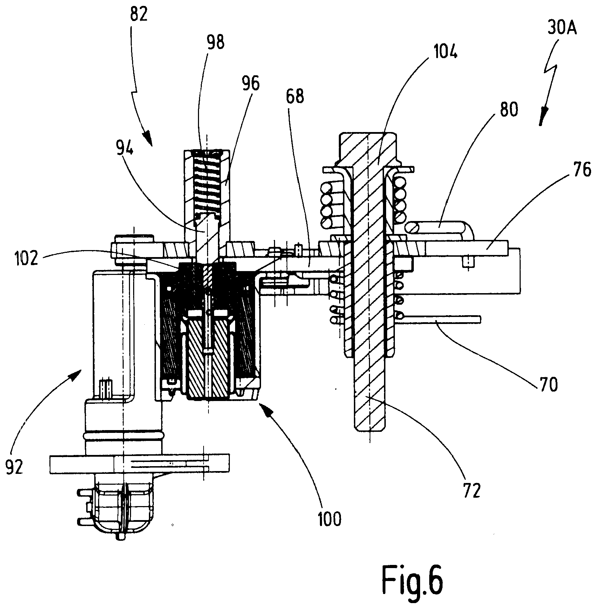

Die Koppeleinrichtung 82 ist im Detail in Fig. 6 dargestellt. Die Koppeleinrichtung 82 beinhaltet einen Koppelstift 94, der in der dargestellten Position nicht näher bezeichnete Öffnungen in dem Betätigungshebel 76 und in dem Nockenhebel 68 axial durchsetzt. Der Koppelstift 94 ist in einem Stiftgehäuse 96 gelagert, das fest mit dem Betätigungshebel 76 verbunden ist. In dem Stiftgehäuse 96 ist eine Stiftfeder 98 angeordnet, die den Koppelstift 94 aus der Öffnung des Betätigungshebels 76 in eine Öffnung des Nockenhebels 68 drückt, um die beiden Hebel miteinander verschwenkfest zu koppeln.

Die Koppeleinrichtung 82 beinhaltet ferner einen Hubmagneten 100, der auf der axial gegenüberliegenden Seite an dem Nockenhebel 68 festgelegt ist. In der Koppelposition der Koppeleinrichtung 82 ist ein Ankerelement 102 des Hubmagnetes 100 koaxial mit dem Koppelstift 94 ausgerichtet. Bei Empfang eines Lösesignals 86 drückt der Hubmagnet 100 das Ankerelement 102 in Richtung des Koppelstifts 94, sodass dieser gegen die Kraft der Stiftfeder 98 in das Stiftgehäuse 96 eingedrückt wird, wobei die Kopplung zwischen dem Betätigungshebel 76 und dem Nockenhebel 68 gelöst wird. Bei einem erneuten Koppeln von Nockenhebel 68 und Betätigungshebel 76 gelangt der Koppelstift 94 wieder in Ausrichtung mit der Öffnung in dem Nockenhebel 68 und drückt aufgrund der Stiftfeder 98 das Ankerelement 102 zurück in eine Ausgangsposition, um die beiden Hebel miteinander zu koppeln.

Fig. 6 zeigt ferner, dass die Hebel 76, 68 verschwenkbar in Bezug auf eine Hebelachse 72 gelagert sind. Die Hebelachse 72 ist durch eine Schraube bzw. einen Bolzen 104 gebildet, der die beiden Hebel axial durchsetzt. Auf der dem Nockenhebel 68 gegenüberliegenden Seite des Betätigungshebels 76 ist die Betätigungshebelfeder 80 angeordnet, die den Betätigungshebel 76 in die Verschwenkrichtung mechanisch vorspannt, um über den Betätigungsmechanismus die Parksperrenklinke 38 in die Parksperrenposition PP zu drücken. Ferner ist auf der dem Betätigungshebel 76 abgewandten Seite des Nockenhebels 68 die Feder 70 angeordnet. Die Federn 70, 80 sind jeweils koaxial zu der Schraube 104 angeordnet. Die Schraube 104 kann ferner dazu dienen, um über die Feder 80 und/oder die Feder 70 die beiden Hebel in axialer Richtung aneinander anzudrücken. Hierdurch kann gewährleistet werden, dass eine hinreichende Überlagerung für den Koppelstift vorhanden ist, wenn sich die Koppeleinrichtung in der Koppelposition befindet.

## Patentansprüche

1. Parksperrenanordnung (30) für ein Kraftfahrzeuggetriebe (16) mit
- einem Gehäuse (22);
- einem Parksperrenrad (32), das mit einer Welle (36) des Kraftfahrzeuggetriebes (16) verbindbar ist,
- einer Parksperrenklinke (38), die um eine gehäusefeste Klinkenachse (40) zwischen einer Parksperrenposition und einer Freigabeposition verschwenkbar ist, wobei die Parksperrenklinke (38) in der Parksperrenposition mit dem Parksperrenrad (32) in Eingriff steht und dessen Drehung verhindert,
- einem Betätigungsmechanismus (50) für die Parksperrenklinke (38), und
- einer Aktuatoranordnung (58) für den Betätigungsmechanismus (50), wobei die Aktuatoranordnung (58) ein Stellglied (68) aufweist, das zwischen einer Grundposition (R) und einer Parkposition (P) versetzbar ist und mit dem Betätigungsmechanismus (50) gekoppelt ist,
wobei die Aktuatoranordnung (58) ein Betätigungsglied (76) aufweist, das über eine lösbare Koppeleinrichtung (82) mit dem Stellglied (68) gekoppelt und mit dem Betätigungsmechanismus (50) zwangsgekoppelt ist, wobei das Betätigungsglied (76) ferner mechanisch vorgespannt ist, um über den Betätigungsmechanismus (50) die Parksperrenklinke (38) in die Parksperrenposition zu drücken, und wobei die Koppeleinrichtung (82) so ausgebildet ist, dass sie mittels eines elektrischen oder eines hydraulischen Lösesignals (86) lösbar ist, wobei die Koppeleinrichtung (82) einen Koppelstift (94) aufweist, der in einer Koppelposition Öffnungen in dem Stellglied (68) und in dem Betätigungsglied (76) axial durchsetzt, **dadurch gekennzeichnet, dass** der Koppelstift (94) an dem Betätigungsglied (76) axial verschieblich gelagert ist.

2. Parksperrenanordnung nach Anspruch 1, **dadurch gekennzeichnet, dass** der Koppelstift (94) in die Koppelposition vorgespannt ist.

3. Parksperrenanordnung nach Anspruch 1 oder 2, **dadurch gekennzeichnet, dass** der Koppelstift (94) mittels eines Magnetaktuators (100) axial bewegbar ist, um die Koppeleinrichtung (82) zu lösen.

4. Parksperrenanordnung nach Anspruch 3, **dadurch gekennzeichnet, dass** der Magnetaktuator (100) an dem Stellglied (68) festgelegt ist.

5. Parksperrenanordnung (30) nach einem der Ansprüche 1 bis 4, **dadurch gekennzeichnet, dass** dem Betätigungsglied (76) ein Positionssensor (92) zugeordnet ist, der die Position des Betätigungsgliedes (76) erfasst

6. Parksperrenanordnung (30) nach Anspruch 1, wobei die Aktuatoranordnung (58) eine Walze (24) aufweist, die zwischen der Grundposition (R) und der Parkposition (P) verdrehbar ist, wobei die Walze (24) einen der Parkposition (P) zugeordneten Nockenabschnitt (60) aufweist, wobei die Aktuatoranordnung (58) ferner eine Hebelanordnung (66) mit einem Nockenhebel (68) als Stellglied (68) aufweist, der um eine gehäusefeste Hebelachse (72) verschwenkbar ist und der einen Nockenfolgerabschnitt (74) aufweist, wobei der Nockenhebel (68) mit dem Betätigungsmechanismus (50) gekoppelt ist, und wobei
die Hebelanordnung (66) das Betätigungsglied die Form eines Betätigungshebels (76) aufweist, der über die lösbare Koppeleinrichtung (82) mit dem Nockenhebel (68) gekoppelt und mit dem Betätigungsmechanismus (50) zwangsgekoppelt ist, wobei der Betätigungshebel (76) ferner in eine Verschwenkrichtung mechanisch vorgespannt ist, um über den Betätigungsmechanismus (50) die Parksperrenklinke (38) in die Parksperrenposition zu drücken.

7. Parksperrenanordnung nach Anspruch 6, **dadurch gekennzeichnet, dass** der Betätigungshebel (76) um die Hebelachse (72) verschwenkbar ist.

8. Parksperrenanordnung nach einem der Ansprüche 6 oder 7, **dadurch gekennzeichnet, dass** die Drehposition der Walze (24) mittels eines Drehpositionssensors (62) erfassbar ist.

9. Parksperrenanordnung nach einem der Ansprüche 6 bis 8, **dadurch gekennzeichnet, dass** der Nockenhebel (68) und der Betätigungshebel (76) mittels einer Federanordnung (80) axial aneinander gedrückt sind.

10. Parksperrenanordnung nach einem der Ansprüche 1 bis 9, **dadurch gekennzeichnet, dass** eine Position des Stellgliedes (68) mittels eines Positionssensors (62) erfassbar ist.

11. Kraftfahrzeuggetriebe (16) mit einer Parksperrenanordnung (30) nach einem der Ansprüche 1 bis 10.

12. Kraftfahrzeuggetriebe nach Anspruch 11, soweit auf einen der Ansprüche 6 bis 10 bezogen, wobei die Walze (24) eine Schaltwalze (24) zum Betätigen wenigstens einer Schaltkupplungsanordnung (26) ist.

## Claims

1. Parking lock assembly (30) for a vehicle transmission (16), with
- a housing (22);
- a parking lock wheel (32) which is connectable to a shaft (36) of the vehicle transmission (16),
- a parking lock pawl (38) which is pivotable between a parking lock position and a release position about a pawl axis (40) mounted on the housing, wherein, in the parking lock position, the parking lock pawl (38) is in engagement with the parking lock wheel (32) and prevents the rotation thereof,
- an actuating mechanism (50) for the parking lock pawl (38), and
- an actuator arrangement (58) for the actuating mechanism (50), wherein the actuator arrangement (58) has a control member (68) which is movable between a home position (R) and a parking position (P) and is coupled to the actuating mechanism (50),
wherein the actuator arrangement (58) has an actuating member (76) which is coupled to the control member (68) via a releasable coupling device (82) and is positively coupled to the actuating mechanism (50), wherein the actuating member (76) is furthermore mechanically preloaded in order, via the actuating mechanism (50), to press the parking lock pawl (38) into the parking lock position, and wherein the coupling device (82) is designed in such a manner that it is releasable by means of an electric or a hydraulic release signal (86),
wherein the coupling device (82) has a coupling pin (94) which, in a coupling position, passes axially through openings in the control member (68) and in the actuating member (76),
**characterized in that** the coupling pin (94) is mounted on the actuating member (76) in an axially displaceable manner.

2. Parking lock assembly according to Claim 1, **characterized in that** the coupling pin (94) is preloaded into the coupling position.

3. Parking lock assembly according to Claim 1 or 2, **characterized in that** the coupling pin (94) is movable axially by means of a magnetic actuator (100) in order to release the coupling device (82).

4. Parking lock assembly according to Claim 3, **characterized in that** the magnetic actuator (100) is fixed on the control member (68).

5. Parking lock assembly (30) according to one of Claims 1 to 4, **characterized in that** the actuating member (76) is assigned a position sensor (92) which senses the position of the actuating member (76).

6. Parking lock assembly (30) according to Claim 1, wherein the actuator arrangement (58) has a drum (24) which is rotatable between the home position (R) and the parking position (P), wherein the drum (24) has a cam portion (60) assigned to the parking position (P), wherein the actuator arrangement (58) furthermore has a lever arrangement (66) with a cam lever (68) as the control member (68) which is pivotable about a lever axis (72) mounted on the housing, and which has a cam follower portion (74), wherein the cam lever (68) is coupled to the actuating mechanism (50), and wherein
the lever arrangement (66) has the actuating member the form of an actuating lever (76) which is coupled to the cam lever (68) via the releasable coupling device (82) and is positively coupled to the actuating mechanism (50), wherein the actuating lever (76) is furthermore mechanically preloaded in a pivoting direction in order, via the actuating mechanism (50), to press the parking lock pawl (38) into the parking lock position.

7. Parking lock assembly according to Claim 6, **characterized in that** the actuating lever (76) is pivotable about the lever axis (72).

8. Parking lock assembly according to either of Claims 6 and 7, **characterized in that** the rotational position of the drum (24) can be sensed by means of a rotational position sensor (62).

9. Parking lock assembly according to one of Claims 6 to 8, **characterized in that** the cam lever (68) and the actuating lever (76) are pressed axially on each other by means of a spring arrangement (80).

10. Parking lock assembly according to one of Claims 1 to 9, **characterized in that** a position of the control member (68) can be sensed by means of a position sensor (62).

11. Vehicle transmission (16) with a parking lock assembly (30) according to one of Claims 1 to 10.

12. Vehicle transmission according to Claim 11, in so far as reference is made to one of Claims 6 to 10, wherein the drum (24) is a selector drum (24) for actuating at least one clutch arrangement (26).

## Revendications

1. Système de frein de stationnement (30) pour une boîte de vitesses de véhicule automobile (16), comprenant
- un boîtier (22) ;
- une roue de frein de stationnement (32) qui peut être raccordée à un arbre (36) de la boîte de vitesses de véhicule automobile (16),
- un cliquet de frein de stationnement (38) qui peut être pivoté autour d'un axe de cliquet (40) fixé au boîtier entre une position de frein de stationnement et une position de libération, le cliquet de frein de stationnement (38), dans la position de frein de stationnement, étant en prise avec la roue de frein de stationnement (32) et empêchant sa rotation,
- un mécanisme d'actionnement (50) pour le cliquet de frein de stationnement (38), et
- un système d'actionneur (58) pour le mécanisme d'actionnement (50), le système d'actionneur (58) présentant un organe de réglage (68) qui peut être déplacé entre une position de base (R) et une position de stationnement (P) et qui est accouplé au mécanisme d'actionnement (50),
le système d'actionneur (58) présentant un organe d'actionnement (76) qui est accouplé à l'organe de réglage (68) par le biais d'un dispositif d'accouplement libérable (82) et qui est accouplé par force au mécanisme d'actionnement (50), l'organe d'actionnement (76) étant en outre précontraint mécaniquement afin de presser le cliquet de frein de stationnement (38) dans la position de frein de stationnement par le biais du mécanisme d'actionnement (50), et le dispositif d'accouplement (82) étant réalisé de manière à ce qu'il puisse être libéré au moyen d'un signal de libération électrique ou hydraulique (86),
le dispositif d'accouplement (82) présentant une goupille d'accouplement (94) qui, dans une position d'accouplement, traverse axialement des ouvertures dans l'organe de réglage (68) et dans l'organe d'actionnement (76), **caractérisé en ce que** la goupille d'accouplement (94) est supportée de manière déplaçable axialement sur l'organe d'actionnement (76).

2. Système de frein de stationnement selon la revendication 1, **caractérisé en ce que** la goupille d'accouplement (94) est précontrainte dans la position d'accouplement.

3. Système de frein de stationnement selon la revendication 1 ou 2, **caractérisé en ce que** la goupille d'accouplement (94) peut être déplacée axialement au moyen d'un actionneur magnétique (100) afin de libérer le dispositif d'accouplement (82).

4. Système de frein de stationnement selon la revendication 3, **caractérisé en ce que** l'actionneur magnétique (100) est fixé à l'organe de réglage (68).

5. Système de frein de stationnement (30) selon l'une quelconque des revendications 1 à 4, **caractérisé en ce qu'**un capteur de position (92) est associé à l'organe d'actionnement (76), lequel détecte la position de l'organe d'actionnement (76).

6. Système de frein de stationnement (30) selon la revendication 1, dans lequel le système d'actionneur (58) présente un rouleau (24) qui peut tourner entre la position de base (R) et la position de stationnement (P), le rouleau (24) présentant une portion de came (60) associée à la position de stationnement (P), le système d'actionneur (58) présentant en outre un système de levier (66) avec un levier de came (68) en tant qu'organe de réglage (68), qui peut pivoter autour d'un axe de levier fixé au boîtier (72) et qui présente une portion de suiveur de came (74), le levier de came (68) étant accouplé au mécanisme d'actionnement (50), et
le système de levier (66) présentant l'organe d'actionnement la forme d'un levier d'actionnement (76) qui, par le biais du dispositif d'accouplement libérable (82), est accouplé au levier de came (68) et est accouplé par force au mécanisme d'actionnement (50), le levier d'actionnement (76) étant précontraint mécaniquement en outre dans une direction de pivotement afin de presser le cliquet de frein de stationnement (38) dans la position de frein de stationnement par le biais du mécanisme d'actionnement (50).

7. Système de frein de stationnement selon la revendication 6, **caractérisé en ce que** le levier d'actionnement (76) peut pivoter autour de l'axe de levier (72).

8. Système de frein de stationnement selon l'une quelconque des revendications 6 ou 7, **caractérisé en ce que** la position de rotation du rouleau (24) peut être détectée au moyen d'un capteur de position de rotation (62).

9. Système de frein de stationnement selon l'une quelconque des revendications 6 à 8, **caractérisé en ce que** le levier de came (68) et le levier d'actionnement (76) sont pressés axialement l'un contre l'autre au moyen d'un système de ressort (80).

10. Système de frein de stationnement selon l'une quelconque des revendications 1 à 9, **caractérisé en ce qu'**une position de l'organe de réglage (68) peut être détectée au moyen d'un capteur de position (62).

11. Boîte de vitesses de véhicule automobile (16) avec un système de frein de stationnement (30) selon l'une quelconque des revendications 1 à 10.

12. Boîte de vitesses de véhicule automobile selon la revendication 11, dans la mesure où elle se rapporte à l'une des revendications 6 à 10, dans laquelle le rouleau (24) est un rouleau de commutation (24) pour l'actionnement d'au moins un système d'embrayage (26).
